(19) Europäisches Patentamt

European Patent Office

Office européen des brevets

(11) **EP 0 983 836 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(51) Int Cl.⁷: **B29C 47/40**, B29C 47/60
// B29B7/42, B23F5/00

(21) Anmeldenummer: **99117028.3**

(22) Anmeldetag: **30.08.1999**

(54) **Kämmende Schnecken mit äquidistanter Flankenspalte**

Intermeshing screws with equidistant gap

Vis s'engrenant avec de distance de points équidistants

(84) Benannte Vertragsstaaten:
**AT DE FR GB**

(30) Priorität: **30.08.1998 DE 19839374**

(43) Veröffentlichungstag der Anmeldung:
**08.03.2000 Patentblatt 2000/10**

(73) Patentinhaber: **Milacron Inc.**
**Cincinnati, Ohio 45206 (US)**

(72) Erfinder:
• **Krüger, Ernst Dr.**
**26629 Grossefehn (DE)**
• **Krüger, Hermann**
**26632 Ihlow (DE)**

(74) Vertreter: **Schohe, Stefan et al**
**Forrester & Boehmert**
**Pettenkoferstrasse 20-22**
**80336 München (DE)**

(56) Entgegenhaltungen:
DE-A- 4 112 122          US-A- 3 765 303
US-A- 4 444 507          US-A- 4 811 528

• **PATENT ABSTRACTS OF JAPAN vol. 009, no. 124 (M-383), 29. Mai 1985 (1985-05-29) & JP 60 009615 A (JIDOSHA KIKI KK), 18. Januar 1985 (1985-01-18)**

**Beschreibung**

Die Erfindung bezieht sich auf dichtkämmende, gegenläufige Doppelschneckenextruder für die Verarbeitung von Kunststoffen. Bekannte derartige Doppelschneckenextruder haben einen trapezförmigen Stegaufbau. Dies führt insbesondere bei unterschiedlichen Drehpositionen in den Flankenspalten zu einer stetigen Veränderung der Spaltweite. Werden diese Spalte in einer ruhenden Position betrachtet, so zeichnet sich ein O-förmiger Verlauf vom Schneckengrund zur Lauffläche der Schnecken ab. Durch diesen Effekt werden die Kunststoffmaterialien inhomogen geschert. Das heißt, daß insbesondere die übertragene mechanische Antriebsleistung in inhomogener Form in den Kunststoff eingebracht wird. Der fließt immer durch den größeren Spalt, indem geringere Scherung eingebracht werden kann.

Ein hieraus resultierender Effekt sind Materialinhomogenitäten, die insbesondere beim PVC zum Verlust bzw. zur Reduktion der Ausnutzung des Eigenschaftspotentials führen. Zur Ausnutzung des vollständigen PVC Eigenschaftspotentials muß dieses gleichmäßig im Volumen bei Temperaturen von ca 150 °C geschert werden.

Die Aufgabe der Erfindung besteht darin, Schneckengeometrien für dichtkämmende, gegenläufige Doppelschnecken zu entwickeln, die es erlauben, ein möglichst gleichmäßiges Scherprofil in den Kunststoff einzubringen.

Diese Aufgabe wird gemäß der Erfindung durch eine Vorrichtung zur Verarbeitung von Kunststoffen gemäß Anspruch 1 gelöst, die mit mindestens zwei gegenläufig miteinander kämmenden Doppelschnecken aufweist, welche mindestens drei unterschiedliche Zonen entlang der Schneckenlänge mit mindestens drei unterschiedlichen Steigungen besitzen, wobei erfindungsgemäß mindestens eine dieser Zonen einen evolventenartigen Verlauf der Steggeometrie hat und in unterschiedlichen Drehpositionen ein annähernd äquidistanter Abstand der Flankenstege vorhanden ist. Indem die Schneckenstege zumindest abschnittweise entsprechend einer Evolventenverzahnung aufgebaut sind, entsteht durch die Form der Evolventenverzahnung beim Abwälzen in jeder Drehposition der gleiche Abstand zwischen der Flanke der rechten und der Flanke der linken Schnecke ebenso wie beim Kopfabstand zum Schneckenkanalgrund.

Der evoluentenartige Verlauf ist aus dem Gebiet der Zahnradtechnik bei Einschnecken-Extrudern bekannt, siehe z.B. US-A-4811528, US-A-4444507.

Durch den evolventförmigen Verlauf der Flankenstege bei Doppelschnecken wird die Scherung wesentlich gleichmäßiger in Kunststoffprodukte eingebracht. Während in der ursprünglichen trapezförmigen Ausführung der Flankenstege der Kunststoff die Möglichkeit hat durch den weitesten Spaltbereich auszuweichen, kann er sich in der erfinderischen Ausführung ausschließlich durch den vorgegebenen Spalt bewegen. Dieses hat den Vorteil, daß die Scherbelastung sehr gleichmäßig in alle Teile eingebracht wird.

Nachfolgend wird die Erfindung anhand einer ein Ausführungsbeispiel darstellenden Zeichnung näher erläutert werden. Es zeigen:

Fig. 1     einen Ausschnitt einer idealen, dichtkämmenden Doppelschnecke im Schnitt;

Fig. 2     einen dem Ausschnitt gemäß Fig. 2 entsprechenden Ausschnitt einer in der Praxis verwirklichten Doppelschnecke im Schnitt;

Fig. 3     eine erfindungsgemäße Ausführung einer Doppelschnecke in einer schematischen Querschnittdarstellung;

Fig. 4     die der Fig. 3 entsprechende Darstellung der Doppelschnecke, wobei zusätzlich beispielhafte Maße angegeben sind;

Fig. 5     eine beispielhafte Flankengeometrie in grober, schematischer Darstellung;

Fig. 6     eine schematische Darstellung der bei der Berechnung einer Evolvente zu berücksichtigenden geometrischen Grundlagen.

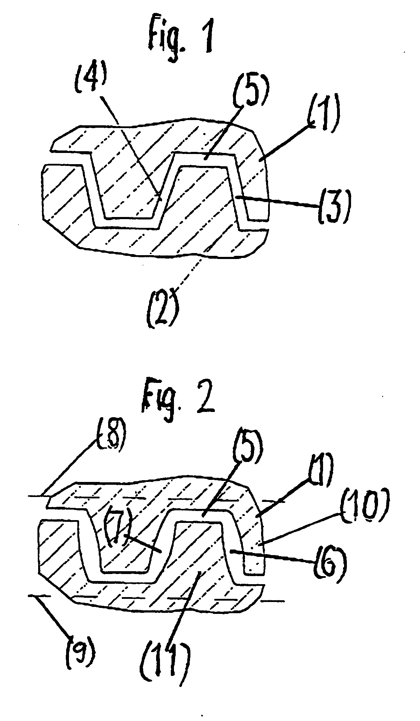

In Fig. 1 ist ein Ausschnitt einer dichtkämmenden Doppelschnecke dargestellt. Die Schneckenstege 1 und 2 umrahmen die Flankenspalte 3 und 4 sowie den Walzenspalt im Bereich 5 zwischen Schneckenkern und Stegaußenfläche. Bei der in Figur 1 dargestellten Situation handelt es sich um eine idealisierte, theoretische Darstellung einer Doppelschnecke, von der aufgrund der praktischen Herstellung beim Fräsvorgang in der Wirklichkeit deutlich abgewichen wird.

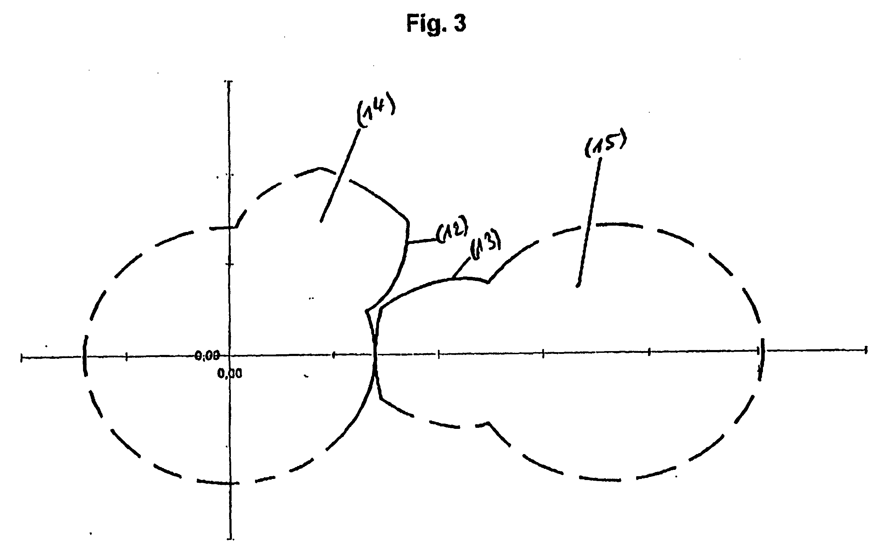

Tatsächlich sehen die Spalten in der Praxis wie in Fig. 2 gezeigt aus. Dort erkennt man, daß der Walzenspalt 5 zwar unverändert bleibt, daß jedoch die im Bereich der Spalten 3 und 4 theoretisch parallel verlaufenden Flanken der Schnecken 10,11 ihre Form derart verändern, daß sich im Bereich 6,7 der Flankenspalte 3,4 zwischen den einander gegenüberliegenden Flanken ein linsen- oder O-förmiger Querschnitt einstellt. Aus der Darstellung der Fig. 2 wird sehr schnell deutlich, daß bei entsprechender Drehung um die Achsen 8 und 9 der Schnecken 10 bzw. 11 eine Variation der Flankenspalte 3,4 in den Bereichen 6 und 7 zwangsläufig ist. Hieraus resultiert immer eine ungleichmäßige Schereinbringung in den Kunststoff.

Der O-förmige Verlauf, wie er in Figur 2 dargestellt ist, kann korrigiert werden durch entsprechende Eingriffe mit beispielsweise einem Formfräser. Jedoch können mit einem solchen Formfräser oder sonstigen Fräsermodifikationen nur annähernde Konturen, wie sie in der theoretischen Darstellung in Fig. 1 aufgeführt sind, erzeugt werden.

In Fig. 3 ist die Ausführung der Schnecken 14 und 15 gemäß der Erfindung schematisch dargestellt. Durch die evolventenförmige Ausführung der Flanken bleibt der Flankenabstand in jeder Drehposition gleich, d.h. die Spaltweite zwischen den Flanken 12 und 13 bleibt konstant.

Die Herstellung der evolventenartigen Flankenkontur für die erfinderische Lösung baut auf folgenden mathematischen Ansatz auf:

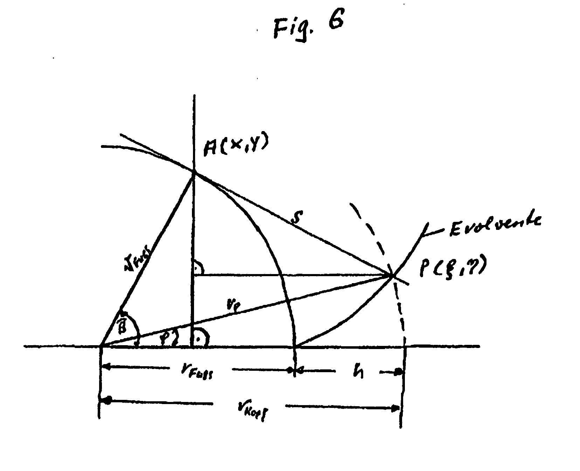

Die Evolvente ist die Abwicklung eines Kreises, wie er in Fig. 6 dargestellt ist. Dabei wurden folgend Abkürzungen benutzt:

S : Bogenlänge
x,y : Koordinaten des Tangentialpunktes A
$\xi,\eta$ : Koordinaten des Evolventenpunktes P
$r_{Fuss}$ : Radius des Fußkreises
$r_{Kopf}$ : Radius des Kopfkreises
h : Höhe des Schneckenganges

Für einen Punkt $P(\xi,\eta)$ auf der Evolvente ergibt sich gemäß der Fig. 6

$$(I) \qquad \xi = x + s \cdot \sin(\beta)$$

und

$$(II) \qquad \eta = y - s \cdot \cos(\beta)$$

Außerdem gilt

$$(III) \qquad x = r_{FUSS} \cdot \cos(\beta)$$

und

$$(IV) \qquad y = r_{FUSS} \cdot \sin(\beta)$$

Die Länge des Kreisbogens ist

$$(V) \qquad s = r_{FUSS} \cdot \beta$$

Durch Einsetzen der Gleichungen (III) und (V) in Gleichung (I) ergibt sich

$$(VI) \qquad \xi = r_{FUSS} \cdot (\cos(\beta) + \beta \cdot \sin(\beta))$$

bzw. mit Gleichung (IV) und (V) in Gleichung (II)

$$(VII) \qquad \eta = r_{FUSS} \cdot (\sin(\beta) - \beta \cdot \cos(\beta))$$

Zur Berechnung der Evolventenflanken werden die karthesischen Koordinaten $\xi,\eta$ des Punktes P $(\xi,\eta)$ wie folgt in Polarkoordinaten umgerechnet.

$$(VIII) \qquad r_P = (\xi^2 + \eta^2)^{1/2}$$

Dabei berechnet sich der Winkel $\varphi$ der Polarkoordinaten für $P(\xi,\eta)$ gemäß

$$(IX) \qquad \varphi = \arctan(\xi/\eta)$$

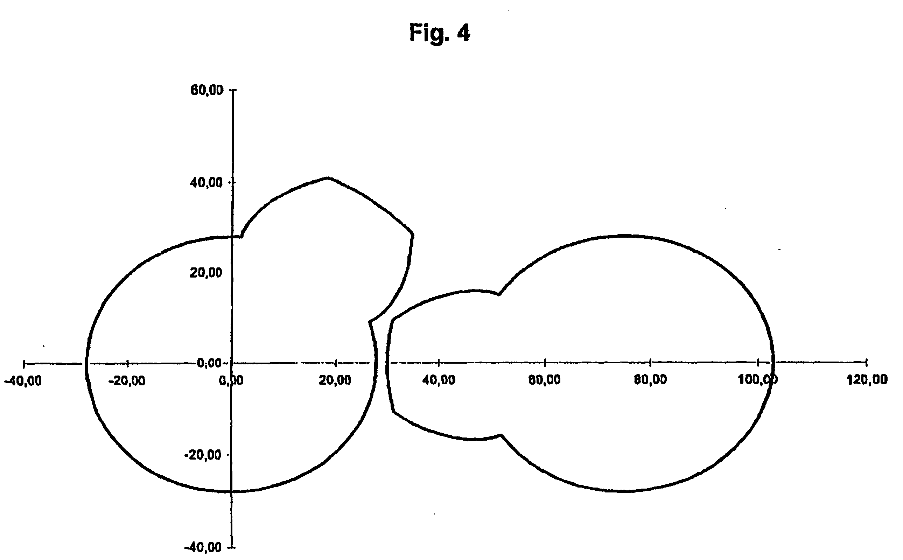

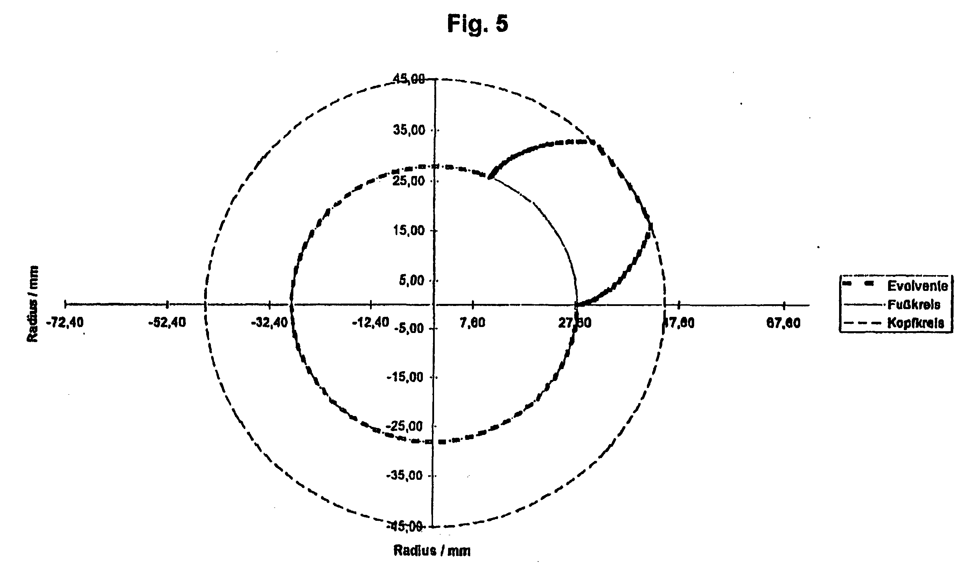

In Fig. 5 ist grob schematisch und exemplarisch für einen Fußkreisradius von 28 mm und einen Kopfkreisradius von 45 mm die Flankengeometrie dargestellt. Durch entsprechende Korrekturfaktoren in der Berechnung wird sichergestellt, daß der geforderte Spaltabstand, wie in Fig. 4 gezeigt, gewährleistet wird.

Der engste Bereich zwischen den Flanken wird Verbindungs- oder Eingriffslinie genannt. Werden die Schnecken gegeneinander abgewälzt, so ergibt die Verbindungslinie eine Gerade. Dieses ist bei geringen Spalten annähernd unabhängig vom Spaltabstand.

Versuche haben ergeben, daß durch den gleichmäßigen Flankenspalt insbesondere bei thermisch empfindlichen Materialien sehr gute Produkteigenschaften entstehen. Dieses ist darauf zurückzuführen, daß durch die evolventartigen Flankenkonturen Scherspitzen, wie sie sonst auftreten, sich kaum noch ereignen und Bereiche mit einer zu niedrigen Scherung ebenfalls vermieden werden.

Die Beschreibung oben ging bisher ausschließlich auf die Spalte in Umfangsrichtung der Schnecken ein. Es wird von einer Betrachtung senkrecht zur Achsrichtung gesprochen. Wichtig ist es ebenfalls, durch entsprechend genaue Fertigung auch in jedem Winkel zwischen der Senkrechten zum Achswinkel und dem Normalwinkel zur Schneckensteigung die geforderte Spaltgröße eingehalten wird.

**Patentansprüche**

1. Vorrichtung zur Verarbeitung von Kunststoffen mit mindestens zwei gegenläufig miteinander kämmenden Doppelschnecken, welche über ihre Schneckenlänge verteilt mindestens drei Zonen aufweisen, die sich durch eine unterschiedliche Steigung des Schneckensteges der jeweiligen Doppelschnecke unterscheiden,
wobei in mindestens einer der Zonen unterschiedlicher Steigung die Flanken des Schneckensteges evolventenartig geformt sind und ein in unterschiedlichen Drehpositionen annähernd gleich bleibender (äquidistanter) Abstand der Flankenstege vorhanden ist.

**2.** Vorrichtung nach Anspruch 1, **dadurch gekennzeichnet, daß** der äquidistante Abstand senkrecht zur Achsrichtung zwischen den Stegen vorliegt.

**3.** Vorrichtung nach einem der voranstehenden Ansprüche, **dadurch gekennzeichnet, daß** der äquidistante Abstand im Normalschnitt zum Stegwinkel vorliegt.

**4.** Vorrichtung nach einem der voranstehenden Ansprüche **dadurch gekennzeichnet, daß** der äquidistante Abstand in einem Winkel zwischen der Stegnormalen und der Senkrechten zum Achsschnitt vorliegt.

**Claims**

**1.** A device for processing plastics with at least two contra-directionally intermeshing double screws having, distributed over their screw length, at least three zones which are distinguished by a different pitch of the land of the respective double screw, wherein the flanks of the screw land are shaped involute-fashion in at least one of the zones of different pitch and the flank lands are at approximately a constant (equidistant) spacing in different rotary positions.

**2.** A device according to claim 1, **characterised in that** the equidistant spacing is present between the lands perpendicularly to the axial direction.

**3.** A device according to any one of the preceding claims, **characterised in that** the equidistant spacing is present in a section normal to the land angle.

**4.** A device according to any one of the preceding claims, **characterised in that** the equidistant spacing is present at an angle between the land normal and the perpendicular to the axial section.

**Revendications**

**1.** Dispositif pour traiter des matières plastiques comportant au moins deux vis doubles qui engrènent entre elles en tournant en des sens opposés et qui possèdent, d'une manière répartie sur leur longueur de vis, au moins trois zones qui diffèrent en ce que les filets des deux vis doubles possèdent des pas respectifs différents, dans lequel dans au moins l'une des zones de pas différent, les flancs du filet de vis sont conformés en développante et il existe entre les flancs des filets une distance qui reste approximativement identique (équidistance) dans des positions de rotation différentes.

**2.** Dispositif selon la revendication 1, **caractérisé en ce que** l'équidistance est présente perpendiculairement à la direction axée entre les filets.

**3.** Dispositif selon l'une des revendications précédentes, **caractérisé en ce que** l'équidistance est présente dans une coupe normale par rapport à l'angle du filet.

**4.** Dispositif selon l'une des revendications précédentes, **caractérisé en ce que** l'équidistance est présente dans un angle entre la normale au filet et la perpendiculaire à la coupe axiale.

Fig. 1

Fig. 2

Fig. 3

Fig. 4

**Fig. 5**

EP 0 983 836 B1

Fig. 6

EP 0 983 836 B1